# EUROPEAN PATENT APPLICATION

(11) **EP 4 749 582 A1**
(43) Date of publication of application: **27.05.2026**
(21) Application number: 24461637.1
(22) Date of filing: 20.11.2024
(51) Int. Cl.: G06V 10/26, G06T 7/00, G06V 10/44, G06V 10/82, G06V 20/69

(54) **A COMPUTER IMPLEMENTED METHOD FOR IDENTIFYING A MICROORGANISM IN A BLOOD AND A DATA PROCESSING SYSTEM FOR THEREFORE**

(71) Applicant: Uniwersytet Jagiellonski, 31-007 Krakow (PL)
(72) Inventor: BRZYCHCZY-WLOCH, Monika, 31-864 Krakow (PL); SROKA-OLEKSIAK, Agnieszka, 30-349 Krakow (PL); GOSIEWSKI, Tomasz, 31-315 Krakow (PL); OCHONSKA, Dorota, 32-020 Wieliczka (PL); BIEGUN-DROZDZ, Katarzyna, 34-300 Zywiec (PL); OLECHOWSKA-JARZAB, Aldona, 30-698 Krakow (PL); ZIELINSKI, Bartosz, 31-514 Krakow (PL); RYMARCZYK, Dawid, 30-383 Krakow (PL); PARDYL, Adam, 30-316 Krakow (PL); WRONKA, Michal, 43-332 Pisarzowice (PL); BOROWA, Adriana, 30-395 Krakow (PL); ADAMCZYK, Milosz, 33-100 Tarnow (PL)
(74) Representative: Kancelaria Eupatent.pl Sp. z o.o.

(57) **Abstract**

The present invention pertains to the computer implemented method for identifying a microorganism in a blood comprising: receiving (101) a microscopic image of a blood smear; detecting (102) plurality of microorganism cells in the microscopic image using a deep learning cellular segmentation model; extracting (103) from the segmented microscopic image a patch of size HxW centred around a centroid of the detected microorganism cell for each detected microorganism cell; encoding (104) of each patch by a deep neural network encoding model into a patch representation vector *uₙ* of size 1×D; aggregating (105) the patch representation vectors uₙ using a pooling method to generate a sample representation vector u of size 1×D; and indicating (106) a species of microorganism present in the microscopic image by classifying the sample representation vector *u* by a multi-layer perceptron (MLP) classifier to class representing specific species. In another aspect the invention relates to the data processing system for carrying out the steps of the method according to the invention.

## Description

### TECHNICAL FIELD

The present invention pertains to the methods for identifying a microorganism in a blood, especially in a microscopic image of a blood smear. The invention relates in particular to methods suitable for diagnosing sepsis.

### BACKGROUND

In recent years, the field of diagnostics has witnessed a significant shift towards automation and the integration of machine learning algorithms. Artificial intelligence (AI) techniques have been effectively utilized in the analysis of diagnostic results across various medical disciplines, including pathology, cardiology, and oncology. Despite these advancements, the application of AI in microbiological diagnostics remains underexplored.

Existing solutions in this domain have demonstrated limited functionality and insufficient classification accuracy, rendering them impractical for routine use. Notably, there is a lack of automated systems capable of classifying bacteria and fungi observed in blood smears.

The rapid identification of microorganisms in blood samples is of paramount importance, particularly in critical clinical scenarios such as sepsis. Accurate identification of the causative agent is essential for the timely and appropriate selection of therapeutic interventions, thereby enhancing patient outcomes. Current rapid identification techniques predominantly rely on molecular methods, which, although effective, are not universally accessible.

The publication by Peri, Anna Maria, et al., titled "New microbiological techniques for the diagnosis of bacterial infections and sepsis in ICU including point of care" (Current Infectious Disease Reports 23.8, 2021: 12), discusses advanced sepsis diagnostic methods aimed at pathogen identification. These methods employ molecular techniques such as Multiplex PCR, DNA microarrays, in situ hybridization, and next-generation sequencing (NGS) to swiftly identify pathogens without the need for culturing. While these approaches expedite the diagnostic process, they necessitate specialized laboratory equipment and skilled personnel, which are not commonly available and incur additional costs.

In contrast, the study by Nakasi, Rose, et al., "A new approach for microscopic diagnosis of malaria parasites in thick blood smears using pre-trained deep learning models" (SN Applied Sciences 2, 2020: 1-7), evaluates the performance of three pretrained deep neural network architectures-faster regional convolutional neural network (faster R-CNN), single-shot multi-box detector (SSD), and RetinaNet-on thick blood smear images using the Tensorflow API. Data augmentation techniques were employed to enhance the performance of these models. The findings indicated that the faster R-CNN model achieved an average precision exceeding 0.94, making it the most accurate for malaria detection, while the SSD model was optimal for mobile device deployment. However, this study did not explore the applicability of these models to other microorganisms or the identification of diverse microbial species.

Patent application WO2019104003A1 discloses a system for the automatic interpretation and classification of images of Gram-stained biological samples. Nonetheless, this solution requires manual selection of image regions containing microorganisms and is not designed for use with blood smear microscopy.

The article by Ma, Pingli, et al., "A state-of-the-art survey of object detection techniques in microorganism image analysis: from classical methods to deep learning approaches" (Artificial Intelligence Review 56.2, 2023: 1627-1698), provides an overview of image analysis techniques for microorganism identification, ranging from classical to deep learning methods. It discusses the use of convolutional neural networks (CNNs) with aggregation modules and multi-layer perceptrons (MLPs) for image analysis. However, the methods described do not address the identification of multiple microorganism species in blood samples.

Current solutions fail to offer a method for the rapid identification of microorganisms in blood that circumvents the need for time-intensive blood cultures or highly specialized molecular techniques. This is particularly critical for the swift identification of pathogens in severe clinical conditions such as sepsis. Consequently, there is a pressing need to develop a method that enables the rapid identification of microorganisms in blood without reliance on specialized equipment, while also allowing for the determination of the specific microorganism species present.

### SUMMARY OF THE INVENTION

The technical problem addressed by the present invention is to provide a method and system for the rapid and accurate identification of microorganisms in blood samples, particularly in microscopic images of blood smears, without the need for time-consuming cultures or specialized molecular techniques. This problem is especially critical in the timely diagnosis and treatment of severe clinical conditions such as sepsis, where delays can significantly impact patient outcomes.

The present invention addresses this problem by introducing a computer-implemented method that utilizes advanced artificial intelligence techniques, specifically deep learning models, for the rapid and accurate identification of microorganisms in blood smears. By employing a deep learning cellular segmentation model and a deep neural network encoding model, the invention automates the detection and classification of microorganism cells within microscopic images. This AI-based approach reduces the reliance on manual processes and specialized equipment, significantly decreasing the time required for identification compared to traditional culturing methods. The technical effect achieved by this AI solution is the ability to quickly and accurately identify microorganisms at the species level directly from microscopic images, thereby enabling timely and appropriate therapeutic interventions in critical conditions like sepsis.

The integration of AI features in the method produces a direct causal link to the technical effect achieved. The deep learning cellular segmentation model precisely delineates microorganism cell boundaries and surfaces in the microscopic image, enabling accurate detection without manual intervention. The deep neural network encoding model transforms each detected cell into a rich feature representation vector, capturing essential morphological characteristics. By aggregating these vectors using a pooling method and classifying them with a multi-layer perceptron (MLP) classifier, the system effectively identifies the species of microorganisms present. This sequence of AI-driven steps results in a synergistic effect where automated segmentation, feature extraction, and classification collaboratively produce the rapid and accurate identification of microorganisms, thereby solving the technical problem outlined.

In a specific aspect, the object of the invention is a computer implemented method for identifying a microorganism in a blood comprising:
- receiving a microscopic image of a blood smear;
- detecting plurality of microorganism cells in the microscopic image using a deep learning cellular segmentation model configured to delineate microorganism cells boundaries and surfaces in the microscopic image, to output a segmented microscopic image, wherein the segmented microscopic image comprises an overlaid boundaries and surfaces of each microorganism cell;
- extracting from the segmented microscopic image a patch of size HxW centred around a centroid of the detected microorganism cell for each detected microorganism cell, wherein H is number of pixels in vertical axis and W is number of pixels in horizontal axis, wherein the centroid of the detected microorganism cell is calculated based on boundaries of each microorganism cell, and wherein the size HxW is larger than the detected microorganism cell;
- encoding of each patch by a deep neural network encoding model into a patch representation vector *uₙ* of size 1×D, wherein D is a number of features encoded by the deep neural network encoding model;
- aggregating the patch representation vectors *uₙ* using a pooling method to generate a sample representation vector u of size 1×D;
- indicating a species of microorganism present in the microscopic image by classifying the sample representation vector *u* by a multi-layer perceptron (MLP) classifier to class representing specific species.

The present invention introduces a novel method for identifying microorganisms in blood by analysing microscopic images of blood smears. Traditionally, the gold standard for identifying microorganisms in blood has been culturing bacteria or employing molecular methods. However, culturing bacteria is a time-consuming process, often requiring several days to yield results. In critical clinical situations, such as sepsis, rapid identification of microorganisms is essential. While molecular methods offer quicker identification, they are typically limited to specialized diagnostic laboratories equipped with expensive molecular diagnostic tools and staffed by highly trained personnel. In contrast, standard diagnostic laboratories predominantly rely on culturing and manual image analysis of Gram-stained samples under a light microscope.

This invention provides an automated method for identifying bacteria in blood by analysing microscopic images obtained from light microscopy, utilizing dedicated deep learning models. This approach significantly reduces the need for specialized equipment, limiting it to basic diagnostic laboratory tools such as a light microscope and a computer with dedicated software or access to network resources where such software is available. Consequently, the method can be widely adopted without necessitating substantial additional investments.

A deep learning cellular segmentation model is employed to delineate the boundaries and surfaces of microorganism cells within the microscopic image. This automation eliminates the need for manual microorganism detection by an operator, thereby enhancing the speed and accuracy of detection.

The invention utilizes a pooling method to aggregate the patch representation vectors generated for each image patch, which improves the accuracy of subsequent classification. This approach leverages images of multiple cells across the entire microscopic image, yielding superior results compared to methods that rely on a single patch for classification.

Furthermore, the implementation of a Multi-Layer Perceptron (MLP) classifier enables the classification of various microorganism species. This capability is crucial in a diagnostic context, as merely identifying organisms as belonging to an unspecified taxonomic group is insufficient for determining the optimal treatment strategy. Clinical symptoms alone often do not provide a clear indication of the expected microorganism species. The invention addresses this challenge by employing an MLP classifier to identify microorganisms at the species level from microscopic blood images.

Overall, the present invention offers a unique method for the precise and rapid identification of microorganisms in blood, based on microscopic images of blood smears.

Preferably, the pooling method is selected from group consisting of: mean-based pooling, average-based pooling, and attention-based pooling.

The above-mentioned pooling methods provide optimal technical results and allow achieving satisfactory precision of the final classification. Moreover, each of the mentioned pooling methods allows the use of any number of patches, which allows the use of a different number of patches depending on the sample. Preferably, the pooling method is attention-based pooling because it allows for the identification of patches with the highest attention weight, which ensures good interpretability of the result by identifying the patches that influenced the classification the most.

Preferably, the multi-layer perceptron (MLP) classifier depth ranges from 1 to 5.

The above-mentioned MLP classifier depth provide optimal technical results and allow achieving satisfactory precision of the final classification.

Preferably, the microorganism is a sepsis-causing pathogenic microorganism.

Rapid identification of pathogenic microorganism causing sepsis is crucial for disposing optimal strategy for treatment sepsis. For different species of pathogenic microorganisms different medicines should be used. By specifically targeting sepsis-causing microorganisms, the method addresses a critical medical need, potentially improving early diagnosis and treatment outcomes for sepsis patients.

Preferably, the microorganism is selected from group consisting of: sepsis causing bacteria and sepsis causing fungi. They are two main groups of pathogens causing sepsis.

Preferably, the microorganism is selected from the group consisting of: *Staphylococcus aureus, Enterococcus faecalis, Streptococcus pneumoniae, Escherichia coli, Klebsiella pneumoniae, Acinetobacter baumanii, Candida albicans, Candida tropicalis, Candida kefyr, Candida glabrata* and *Candida parapsilosis.*

Mentioned species are the most common pathogens causing sepsis.

Preferably, the microscopic image presents a Gram-stained blood smear.

Using Gram-stained blood smears leverages a widely used diagnostic technique, facilitating integration into existing laboratory workflows and enhancing the method's practicality.

Preferably, the method according to the invention further comprising, prior to receiving the microscopic image of the blood smear:
- training of the deep learning cellular segmentation model comprising:
   ∘ using the deep learning cellular segmentation model pretrained on dataset comprising plurality of highly varied images of cells labelled manually as a starting point for training;
   ∘ processing through the pretrained deep learning cellular segmentation model a first subset of microscopic images of a blood smear comprising plurality of microorganism cells to output the segmented microscopic image;
   ∘ correcting the segmented microscopic image by delineating missed microorganism cells boundaries and surfaces, and removing incorrectly applied microorganism cells boundaries and surfaces, to obtain a corrected segmented microscopic image;
   ∘ fine-tuning the deep learning cellular segmentation model with the corrected segmented microscopic image;
- training jointly the deep learning cellular segmentation model, the deep neural network encoding model, the pooling method and the multi-layer perceptron (MLP) classifier using a gradient descent optimization by processing by the method according to any one of preceding claims a second subset of microscopic images of a blood smear comprising plurality of microorganism cells for indicating what a species of microorganism is present in the microscopic image and verifying performed indication with the label of each microscopic image.

Starting with a pretrained model and fine-tuning it with corrected segmented images ensures high initial accuracy and adaptability to specific datasets, improving overall model performance.

Training all components (segmentation model, encoding model, pooling method, MLP classifier) together ensures cohesive optimization, leading to better integration and performance.

Preferably, the gradient descent optimization uses AdamW optimiser with the learning rate selected in range of [0.0001, 0.005] and weight decay in range of [0.00001, 0.1].

Using the AdamW optimizer with specified learning rate and weight decay ranges allows for efficient and effective model training, reducing overfitting and improving convergence.

Preferably, the gradient descent optimization uses a OneCycle learning rate scheduler.

Implementing a OneCycle learning rate scheduler helps in achieving faster convergence and better generalization by dynamically adjusting the learning rate during training.

Preferably, the microorganism present in the microscopic images collected in the second subset of microscopic images is sepsis causing pathogenic microorganism.

Training specifically on sepsis-causing microorganisms ensures that the model is highly specialized and accurate in detecting these critical pathogens.

Preferably, the pathogenic microorganism present in the microscopic images collected in the second subset of microscopic images is selected from group consisting of: sepsis causing bacteria and sepsis causing fungi.

By focusing on sepsis-causing bacteria and fungi, the training process is tailored to enhance detection accuracy for these specific pathogens, which are of high clinical importance.

Preferably, the pathogenic microorganism present in the microscopic images collected in the second subset of microscopic images is selected from group consisting of: *Staphylococcus aureus, Enterococcus faecalis, Streptococcus pneumoniae, Escherichia coli, Klebsiella pneumoniae, Acinetobacter baumanii, Candida albicans, Candida tropicalis, Candida kefyr, Candida glabrata* and *Candida parapsilosis.*

Including a wide range of specific pathogens in the training dataset ensures that the model is robust and capable of identifying multiple sepsis-causing microorganisms.

In another aspect invention relates to a data processing system comprising means for carrying out the steps of the method according to the invention.

A system designed to carry out the method steps ensures seamless operation and integration, providing a complete solution for microorganism identification.

Preferably, the data processing system comprises:
- a detecting module for detecting plurality of microorganism cells in a microscopic image, to output a segmented microscopic image;
- an image patch extraction module for extracting from the segmented microscopic image the patch for each detected pathogenic microorganism cell;
- a encoding module for encoding each patch into a patch representation vector *uₙ*;
- an aggregation module for aggregating the patch representation vectors *uₙ* to a sample representation vector u;
- a classification module for indicating a species of microorganism present in the microscopic image by classifying the sample representation vector u.

The inclusion of specific modules for detection, extraction, encoding, aggregation, and classification allows for modular updates and improvements, enhancing system flexibility and scalability.

The solutions according to the present invention are directly applicable to the technical field of medical diagnostics, specifically in the analysis of microscopic images for the identification of microorganisms in blood smears. By utilizing deep learning models for cell segmentation and classification, the method automates the detection and identification process, which traditionally requires manual examination by skilled microbiologists. This technical application of AI results in a significant reduction of analysis time and increases accuracy, addressing the urgent need for rapid diagnostics in critical conditions like sepsis.

The tangible advantages of the technical effect include the ability to provide prompt and precise identification of pathogens, enabling clinicians to initiate appropriate treatments without delay. This is particularly crucial in the management of sepsis, where every hour of delayed treatment can significantly increase mortality rates. Additionally, the method reduces reliance on specialized molecular diagnostics equipment, making advanced diagnostic capabilities accessible to a wider range of healthcare facilities, including those with limited resources.

The technical effect of rapid and accurate microorganism identification is applicable across the entire claim scope, as the method is designed to work with any microscopic images of blood smears containing microorganisms. The AI models can be trained and fine-tuned for different species and staining techniques, ensuring that the benefits of the invention can be realized regardless of variations in sample preparation or imaging equipment. This universality underscores the method's applicability in diverse clinical settings and its potential to improve diagnostic workflows on a broad scale.

### BRIEF DESCRIPTION OF DRAWINGS

The invention is shown by means of example embodiment in a drawing, wherein:
Fig. 1 shows schematically steps of the method for identifying a microorganism in a blood;
Fig. 2 shows schematically steps of the method for identifying a microorganism in a blood comprising training steps;
Fig. 3 shows schematically steps of the method for training a deep learning cellular segmentation model;
Fig. 4 shows some examples of a segmented microscopic images of Gram-positive and Gram-negative bacteria;
Fig. 5 shows some examples of a segmented microscopic images of yeast-like fungi;
Fig. 6A-F shows the ROC graph for sample bacterial species;
Fig. 7A-E shows the ROC graph for sample fungi species;
Fig. 8 shows schematically an embodiment of the data processing system according to the invention.

### DETAILED DESCRIPTION

In certain aspects, the present invention relates to a computer-implemented method for the identification of microorganisms in blood samples. This method enables the rapid identification of microorganisms at the species level using only basic, widely available laboratory diagnostic equipment and specialized software. It is particularly advantageous for the swift identification of pathogens in blood that may cause severe clinical conditions such as sepsis. Additionally, it can be employed for other purposes, such as the analysis of archived blood smear preparations for scientific research.

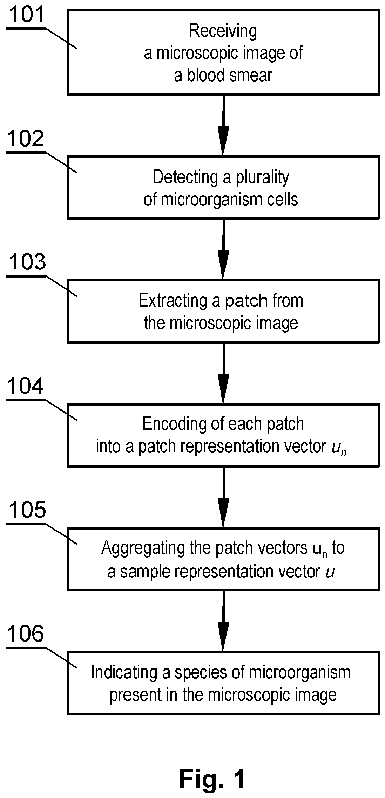

The schematic representation of the method according to the invention is illustrated in Fig. 1. The initial step of the method involves receiving 101 a microscopic image of a blood smear. This image may originate from a database containing previously captured microscopic images or be obtained directly from a camera connected to a microscope. Preferably, the microscopic image is acquired using a light microscope, as this is the most commonly available type of microscope in diagnostic laboratories. However, in certain embodiments, the image may be obtained using alternative techniques, such as fluorescence microscopy. In some preferred embodiments the microscopic image presents a Gram-stained blood smear. This allows for staining, better visibility and disclosure of certain characteristics of the microorganisms present in the blood smear.

The subsequent step 102 involves detecting a plurality of microorganism cells within the microscopic image using a deep learning cellular segmentation model. This approach facilitates the identification of multiple regions within the image that contain microorganisms, eliminating the need for manual identification, which can be both time-consuming and challenging. The deep learning cellular segmentation model is designed to delineate the boundaries and surfaces of microorganism cells within the microscopic image, resulting in a segmented image. In some embodiments, the deep learning cellular segmentation model may be implemented as a CellPose model. Preferably, the model is fine-tuned with microscopic images containing a variety of microorganisms. The segmented image includes overlaid boundaries and surfaces for each microorganism cell.

The next step 103 involves extracting a patch of size HxW, centred around the centroid of each detected microorganism cell, from the segmented microscopic image. Here, H represents the number of pixels along the vertical axis, and W represents the number of pixels along the horizontal axis. For instance, the HxW size of a patch may be 128x128, 128x256, 256x256, 256x512, 512x512, 512x1024, or 1024x1024, with a preference for 512x512. The centroid of the detected microorganism cell is calculated based on the boundaries of each cell. In this patent application, the centroid is defined as the geometric centre of the area delineated by the boundaries of the microorganism cell in the microscopic image. The patch size HxW is chosen to be larger than the detected microorganism cell to ensure that the entire cell surface is included, allowing all its features to be available for subsequent analysis. In some embodiments, the patch may contain more than one microorganism cell. The patch that does not contain any microorganism cells is not passed on to further analysis steps.

The following step 104 involves encoding each patch using a deep neural network encoding model to generate a patch representation vector *uₙ* of size 1×D. The deep neural network encoding model is configured to transform each patch into a patch representation vector *uₙ* that encapsulates the essential features of the image. These features may include edges, textures, shapes, and patterns that are critical for understanding the image content. However, the features and their values are abstract and may take on more complex forms. The deep neural network encoding model autonomously determines which features to consider when creating the patch representation vector *uₙ*, and this need not be disclosed to the user. The dimension D of the patch representation vector *uₙ* corresponds to the number of features encoded by the model. D can take different values depending on the deep neural network encoding model architecture, for example in some embodiments 100, 128, 200, 256, 300, 400, 500, 512, 600, 700, 800, 900, 1000 or 1024.The deep neural network encoding model can be implemented using pre-trained models known in the art, such as ResNet18, VGG19, InceptionV3, DenseNet, MobileNet, or EfficientNet. In some embodiments, the deep neural network encoding model is pretrained on histological slides similar to Gram-stained microscopic images. In some embodiments, the deep neural network encoding model is fine-tuned using labelled microscopic images containing microbial cells.

The subsequent step 105 involves aggregating the patch representation vectors *uₙ* using a pooling method to generate a sample representation vector u of size 1×D. The dimension D of the sample representation vector u is the same as in the patch representation vector *uₙ* and correspond to the same features. Pooling methods, well-known in the art, allow for the combination of information from multiple patches, thereby enhancing the quality of the final classification. In some embodiments, the pooling method is selected from a group consisting of DSMIL, CLAM, mean-based pooling, average-based pooling, and attention-based pooling. Preferably, the pooling method is attention-based pooling because it allows for the identification of patches with the highest attention weight, which ensures good interpretability of the result by identifying the patches that influenced the classification the most. Additionally, each of the mentioned pooling methods allows the use of any number of patches, which allows the use of a different number of patches depending on the sample.

The final step 106 involves indicating the species of microorganism present in the microscopic image by classifying the sample representation vector u using a multi-layer perceptron (MLP) classifier to assign it to a class representing a specific species. In some embodiments, the depth of the MLP classifier ranges from 1 to 5 layers.

In some embodiments, the identified microorganism is a sepsis-causing pathogenic microorganism.

In some embodiments, the identified microorganism is selected from group consisting of: sepsis causing bacteria and sepsis causing fungi.

In some embodiments, the identified microorganism is selected from the group consisting of: *Staphylococcus aureus, Enterococcus faecalis, Streptococcus pneumoniae, Escherichia coli, Klebsiella pneumoniae, Acinetobacter baumanii, Candida albicans, Candida tropicalis, Candida kefyr, Candida glabrata* and *Candida parapsilosis.*

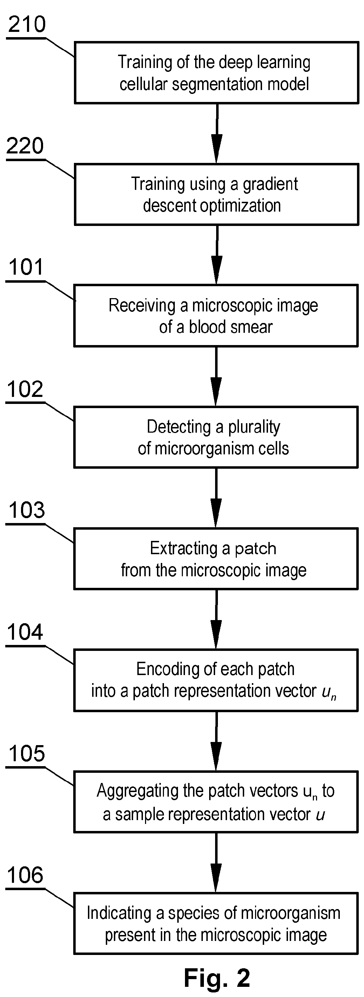

Fig. 2 shows the schematic representation of an embodiment of the method according to the invention further comprising, prior to receiving 101 the microscopic image of the blood smear: training 210 of the deep learning cellular segmentation model comprising and training 220 jointly the deep learning cellular segmentation model, the deep neural network encoding model, the pooling method and the multi-layer perceptron (MLP) classifier using a gradient descent optimization.

In some embodiments training 210 of the deep learning cellular segmentation model comprises:
- using 211 the deep learning cellular segmentation model pretrained on dataset comprising plurality of highly varied images of cells labelled manually (e.g. CellPose dataset) as a starting point for training;
- processing 212 through the pretrained deep learning cellular segmentation model a first subset of microscopic images of a blood smear comprising plurality of microorganism cells to output the segmented microscopic image;
- correcting 213 the segmented microscopic image by delineating missed microorganism cells boundaries and surfaces, and removing incorrectly applied microorganism cells boundaries and surfaces, to obtain a corrected segmented microscopic image;
- fine-tuning 214 the deep learning cellular segmentation model with the corrected segmented microscopic image.

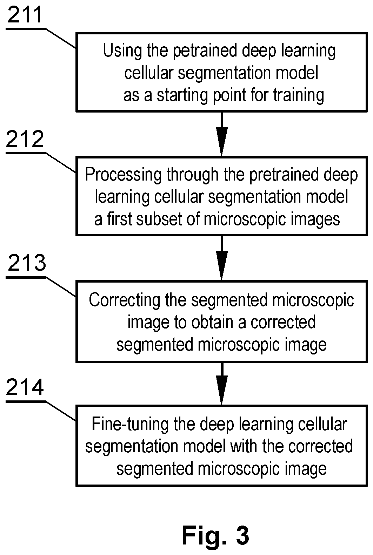

Steps of these process are schematically presented in Fig. 3.

Training 220 jointly the deep learning cellular segmentation model, the deep neural network encoding model, the pooling method and the multi-layer perceptron (MLP) classifier using a gradient descent optimization is performed by processing by the method according to the invention a second subset of microscopic images of a blood smear comprising plurality of microorganism cells for indicating what a species of pathogenic microorganism is present in the microscopic image and verifying performed indication with the label of each microscopic image. Microscopic images of a blood smear could be Gram-stained.

In some embodiments the microorganism present in the microscopic images collected in the second subset of microscopic images is sepsis causing pathogenic microorganism.

In some embodiments the microorganism present in the microscopic images collected in the second subset of microscopic images is selected from group consisting of: sepsis causing bacteria and sepsis causing fungi.

In some embodiments the microorganism present in the microscopic images collected in the second subset of microscopic images is selected from group consisting of: *Staphylococcus aureus, Enterococcus faecalis, Streptococcus pneumoniae, Escherichia coli, Klebsiella pneumoniae, Acinetobacter baumanii, Candida albicans, Candida tropicalis, Candida kefyr, Candida glabrata* and *Candida parapsilosis.*

In some embodiments the gradient descent optimization uses AdamW optimiser with the learning rate selected in range of [0.0001, 0.005] and weight decay in range of [0.00001, 0.1].

In some embodiments the gradient descent optimization uses a OneCycle learning rate scheduler.

In some embodiments the second subset of microscopic images comprises microscopic images obtained by image augmentations (rotations, horizontal and vertical flipping, random cropping and colour jitter) and image normalization (subtracting the mean and dividing by the standard deviation calculated on a subset of images) methods.

In some embodiments MLP classifier allows determining the probability of the presence of more than one species of microorganism in the blood sample.

In another aspect the invention provides a data processing system 300 comprising means for carrying out the steps of the method according to the invention.

In some embodiments the data processing system comprising:
- a detecting module 311 for detecting plurality of microorganism cells in a microscopic image, to output a segmented microscopic image;
- an image patch extraction module 312 for extracting from the segmented microscopic image the patch for each detected pathogenic microorganism cell;
- a encoding module 313 for encoding each patch into a patch representation vector *uₙ*;
- an aggregation module 314 for aggregating the patch representation vectors *uₙ* to a sample representation vector u;
- a classification module 315 for indicating a species of microorganism present in the microscopic image by classifying the sample representation vector u.

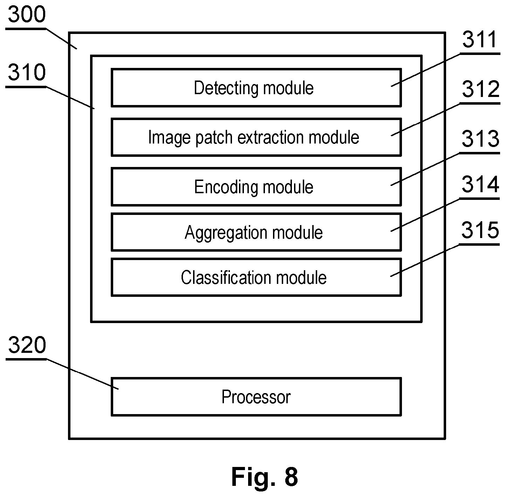

A schematic structure of the data processing system according to the invention is presented in Fig. 8.

### Example

A deep learning cellular segmentation model was implemented using the CellPose framework, specifically utilizing a model denoted as CellPose model. This model was pretrained 211 on a diverse dataset comprising a wide array of manually labelled cellular images, which are part of the CellPose database. Subsequently, this pretrained deep learning cellular segmentation model was employed to process 212 a first subset of microscopic images derived from blood smears containing a variety of microorganism cells. This processing step, labelled as step 212, resulted in the generation of segmented microscopic images.

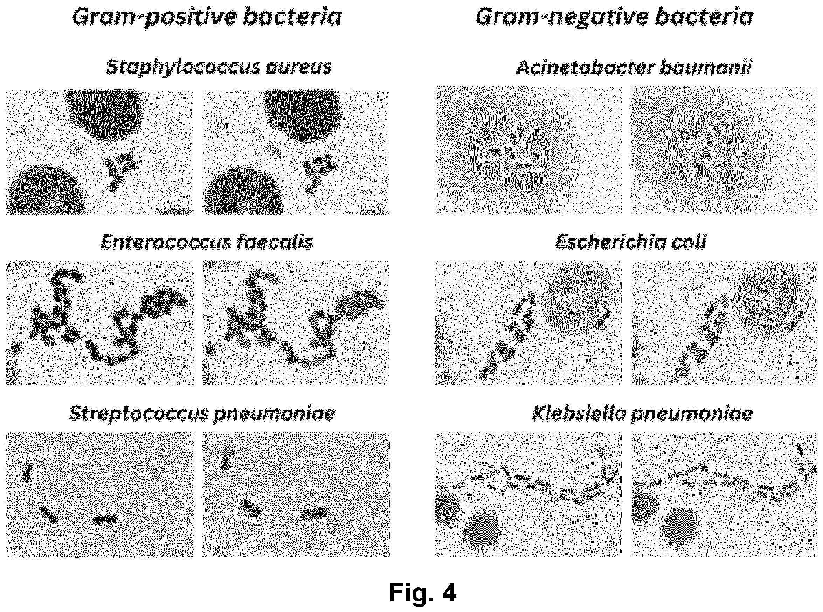

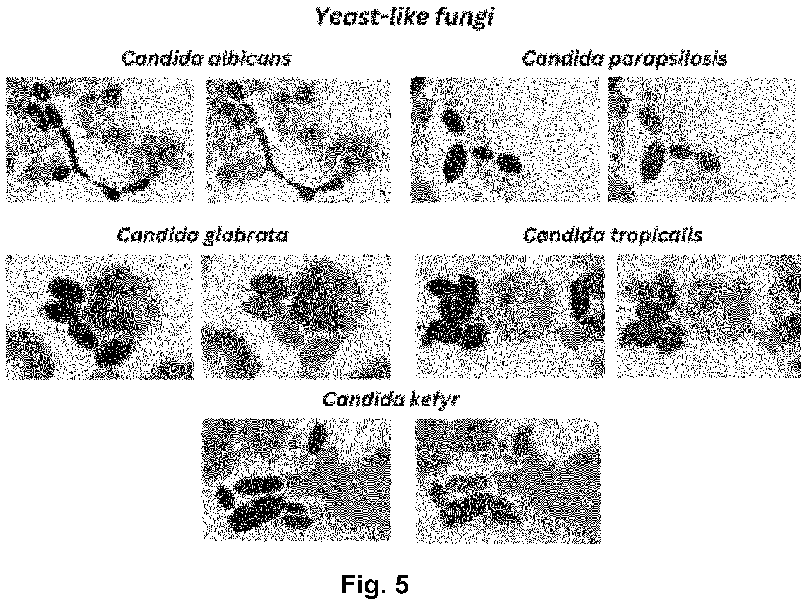

In the subsequent step 213, these segmented microscopic images underwent manual correction by a microbiologist. The microbiologist meticulously delineated any microorganism cell boundaries and surfaces that were initially missed and rectified any incorrectly applied boundaries and surfaces, thereby producing corrected segmented microscopic images. Fig. 4 illustrates example fragments of images featuring Gram-positive and Gram-negative bacteria that were subjected to active learning. For each bacterial species, the original image fragment is displayed on the left, while the right side shows the fragment with microbiologist-overlaid microorganism cell boundaries and surfaces. Similarly, Fig. 5 presents example fragments of images of yeast-like fungi subjected to active learning, with the original image fragment on the left and the microbiologist-overlaid boundaries and surfaces on the right.

The corrected segmented microscopic images served as feedback for fine-tuning the deep learning cellular segmentation model, as indicated in step 214. This fine-tuning process utilized the corrected segmented microscopic images to enhance the model's accuracy.

A deep neural network encoding model was implemented using a ResNet18 architecture, which was pretrained on histological slides, preferably those similar to Gram-stained images, to ensure optimal initialization. This model was configured to output a patch representation vector *uₙ* of size 1×D, wherein D=512.

An attention-based pooling method was employed, utilizing the dual stream multiple instance learning (DS-MIL) algorithm. A multi-layer perceptron (MLP) classifier with a depth of G=1 was used to classify the sample representation vector u into classes representing specific microorganism species.

The deep learning cellular segmentation model, the deep neural network encoding model, the pooling method, and the MLP classifier were integrated into a comprehensive data processing system, as depicted in Fig. 8. This system was subsequently trained using a second subset of microscopic images from Gram-stained blood smears containing various microorganism cells. The purpose was to identify the species of microorganisms present in the microscopic images and verify the identification against the labelled data for each image.

The system's training was conducted using gradient descent optimization, specifically employing the AdamW optimizer. The parameters were determined experimentally through Bayesian hyperparameter optimization. The learning rate was selected within the range of [0.0001, 0.005], and the weight decay was set between [0.00001, 0.1]. Additionally, a OneCycle learning rate scheduler was utilized. The system underwent training for 100 epochs. To ensure high accuracy, image augmentations, including rotations, horizontal and vertical flipping, random cropping, and colour jitter, were applied. Image normalization was also performed by subtracting the mean and dividing by the standard deviation calculated from a subset of images.

The second subset of microscopic images included pathogens commonly associated with sepsis, comprising six bacterial species: three Gram-positive species (*Staphylococcus aureus, Enterococcus faecalis, Streptococcus pneumoniae*) and three Gram-negative species (*Escherichia coli, Klebsiella pneumoniae, Acinetobacter baumannii*). Additionally, it included five yeast-like fungi from the *Candida* genus: *Candida albicans, Candida tropicalis, Candida kefyr, Candida glabrata, and Candida parapsilosis.*

These microscopic images were sourced from the archival, anonymized database of the Department of Microbiology at the University Hospital in Krakow. The images were captured from positive blood smears stained using the Gram method, utilizing a BX63 Olympus microscope at 100x magnification. The species identification of bacteria and fungi was confirmed following a comprehensive diagnostic procedure, which included initial blood culture in liquid media within a closed system, blood culture on solid media, and identification of the grown colonies using the MALDI-TOF method. Furthermore, the second subset of microscopic images included reference strain images for four bacterial species (*Staphylococcus aureus, Enterococcus faecalis, Escherichia coli,* and *Acinetobacter baumannii*).

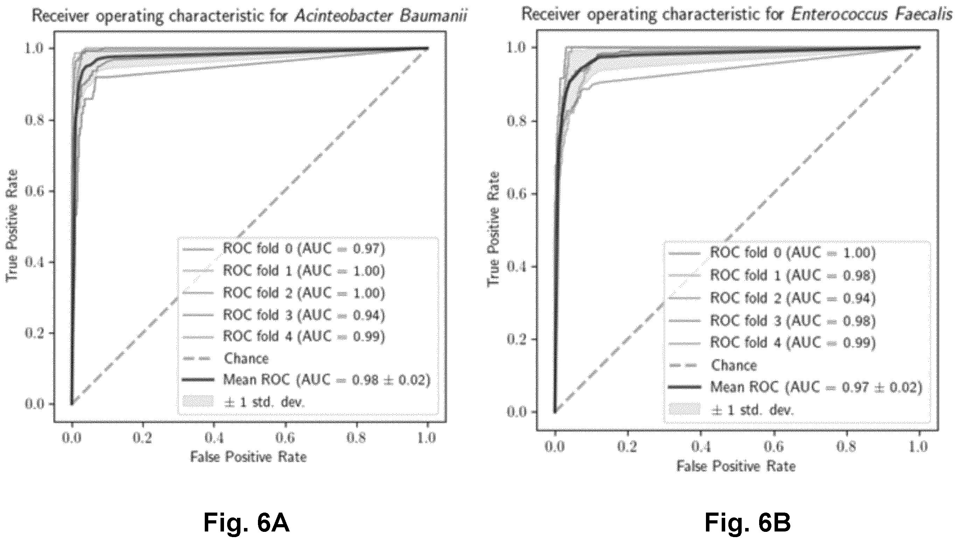

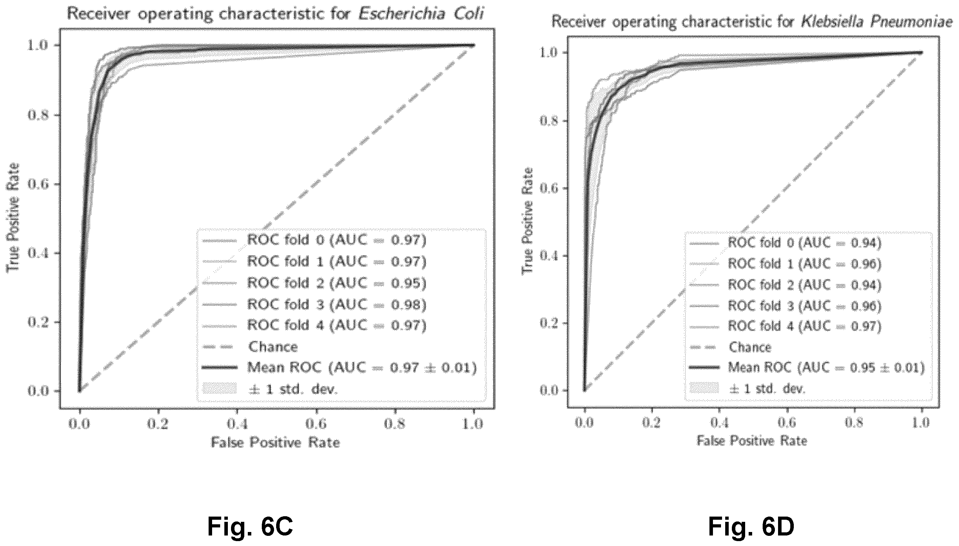

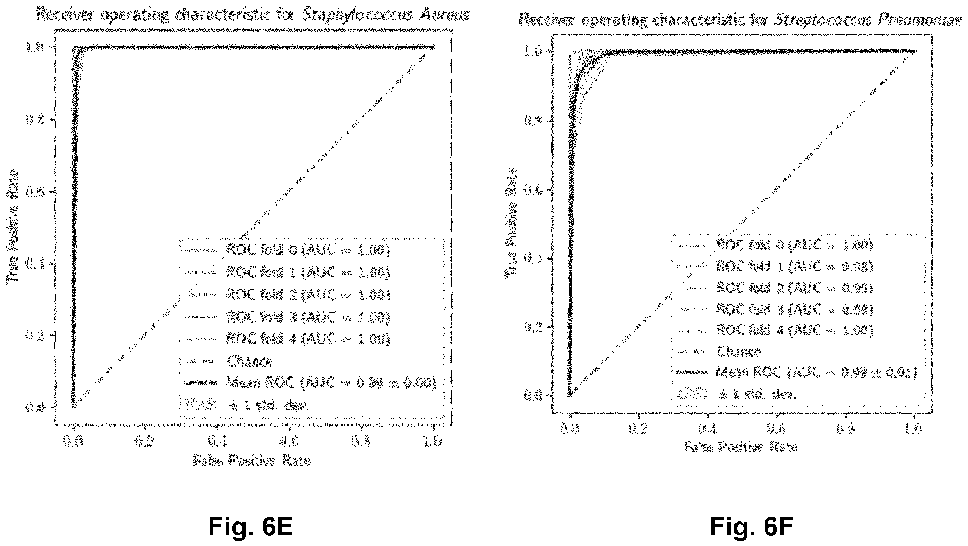

The method according to the invention, implemented with the described system, was evaluated on an in-house bacterial dataset consisting of 6,589 images, divided into six classes (*Acinetobacter baumannii, Enterococcus faecalis, Escherichia coli, Klebsiella pneumoniae, Staphylococcus aureus, Streptococcus pneumoniae).* Following best practices in machine learning model evaluation, a stratified 5-fold cross-validation was performed, ensuring equal class representation in each split. For each experiment, the entire system was trained independently. The resultant average accuracy of microorganism identification was 86.92%, with a ROC AUC (area under the receiver operating characteristic curve) of 0.9827. Fig. 6A-F presents the classifier confusion matrices for each of the five cross-validation experiments.

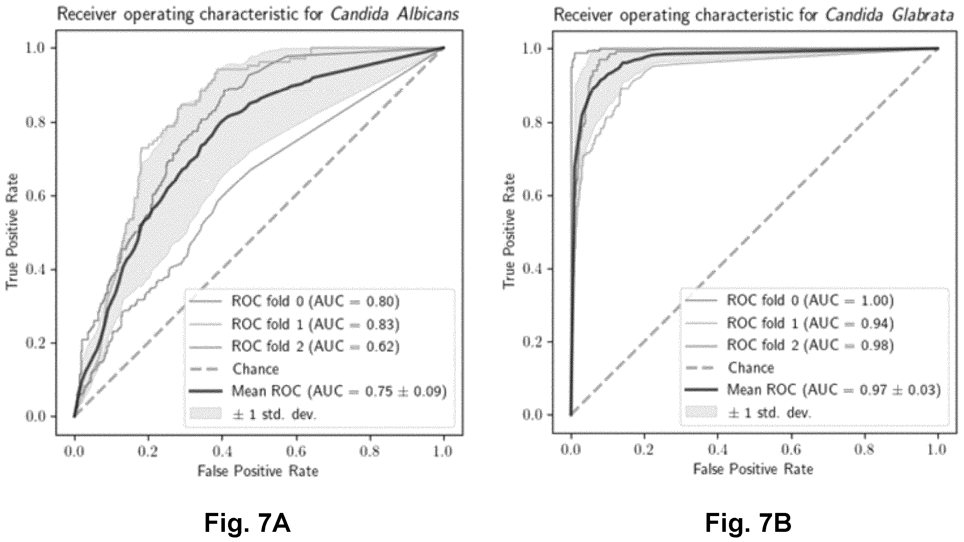

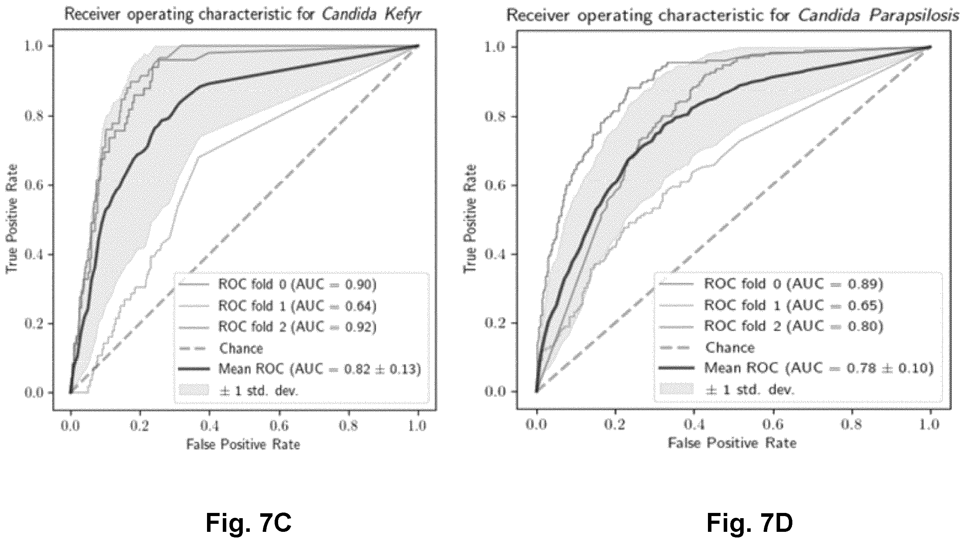

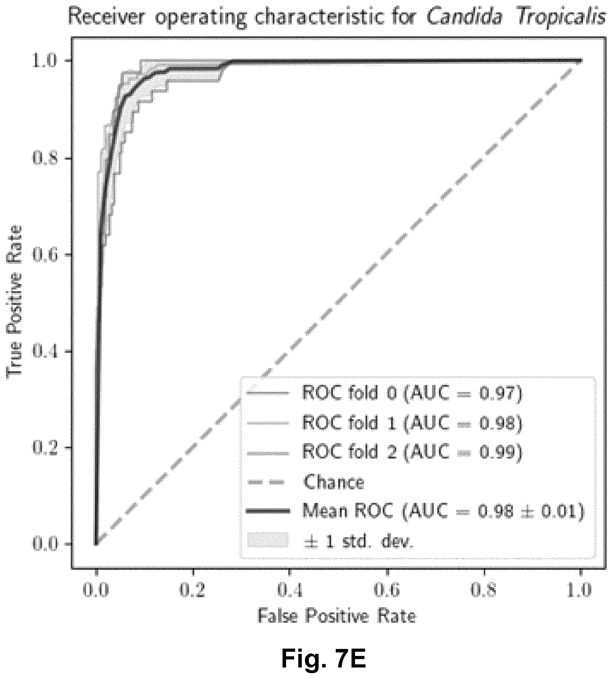

Similarly, the assessment was conducted on an internal yeast-like fungi dataset comprising 1,961 images, divided into five classes (*Candida albicans, Candida glabrata, Candida kefyr, Candida parapsilosis, Candida tropicalis*). Due to the limited number of patients with Candida kefyr in the dataset, the model was assessed using a stratified 3-fold cross-validation, ensuring equal class representation in each split. As before, the entire system was trained independently for each experiment. The obtained average accuracy of microorganism identification was 60.57%, with a ROC AUC of 0.8638. Fig. 7A-E shows the classifier confusion matrices for each of the three cross-validation experiments.

Table 1 provides a quantitative summary of the microscopic images of bacteria and fungi used in the training and evaluation.

**Table 1.**

| **Sort of microorganism** | **Species name** | **No. of patients** | **No. of microscopic pictures** | **No. of microscopic pictures from reference strains** | **No. of patches** | **No. of pictures to the testing** | **No. of pictures to the training** |
|---|---|---|---|---|---|---|---|
| Bacteria | *Staphylococcus aureus* | 18 | 1 011 | 20 | ∼157 371 | ∼206 | ∼825 |
| | *Enterococcus faecalis* | 13 | 671 | 20 | ∼85 801 | ∼138 | ∼553 |
| | *Streptococcus pneumoniae* | 14 | 1 273 | 0 | ∼106 448 | ∼254 | ∼1 019 |
| | *Escherichia coli* | 27 | 1 677 | 20 | ~32 039 | ∼339 | ∼1 358 |
| | *Klebsiella pneumoniae* | 21 | 1 362 | 0 | ∼71 981 | ∼272 | ∼1 090 |
| | *Acinetobacter baumanii* | 11 | 515 | 20 | ~16 654 | ∼107 | ∼428 |
| **SUM** | | **104** | **6 509** | 80 | ∼470 294 | ∼1 316 | ∼5 273 |
| Fungi | *Candida albicans* | 13 | 603 | 0 | ∼39 869 | ∼201 | ∼402 |
| | *Candida glabrata* | 10 | 466 | 0 | ∼29 869 | ∼155 | ∼311 |
| | *Candida kefyr* | 3 | 165 | 0 | ~11 087 | ∼55 | ∼110 |
| | *Candida parapsilosis* | 8 | 529 | 0 | ∼35 609 | ∼176 | ∼353 |
| | *Candida tropicalis* | 4 | 198 | 0 | ~13760 | ∼66 | ∼132 |
| ***SUM*** | | **38** | **1961** | 0 | ∼130 194 | ∼653 | ∼1 308 |
| ***Total*** | | **142** | **8 550** | | **600 488** | **1 969** | **6 581** |

## Claims

1. A computer implemented method for identifying a microorganism in a blood comprising:
receiving (101) a microscopic image of a blood smear;
detecting (102) plurality of microorganism cells in the microscopic image using a deep learning cellular segmentation model configured to delineate microorganism cells boundaries and surfaces in the microscopic image, to output a segmented microscopic image, wherein the segmented microscopic image comprises an overlaid boundaries and surfaces of each microorganism cell;
extracting (103) from the segmented microscopic image a patch of size HxW centred around a centroid of the detected microorganism cell for each detected microorganism cell, wherein H is number of pixels in vertical axis and W is number of pixels in horizontal axis, wherein the centroid of the detected microorganism cell is calculated based on boundaries of each microorganism cell, and wherein the size HxW is larger than the detected microorganism cell;
encoding (104) of each patch by a deep neural network encoding model into a patch representation vector *uₙ* of size 1×D, wherein D is a number of features encoded by the deep neural network encoding model;
aggregating (105) the patch representation vectors *uₙ* using a pooling method to generate a sample representation vector u of size 1×D;
indicating (106) a species of microorganism present in the microscopic image by classifying the sample representation vector *u* by a multi-layer perceptron (MLP) classifier to class representing specific species.

2. The method according to claim 1, wherein the pooling method is selected from group consisting of: mean-based pooling, average-based pooling, and attention-based pooling.

3. The method according to any one of preceding claims, wherein the multi-layer perceptron (MLP) classifier depth ranges from 1 to 5.

4. The method according to any one of preceding claims, **characterised by** that the microorganism is a sepsis-causing pathogenic microorganism.

5. The method according to any one of preceding claims, **characterised by** that the microorganism is selected from group consisting of: sepsis causing bacteria and sepsis causing fungi.

6. The method according to any one of preceding claims, **characterised by** that the microorganism is selected from the group consisting of: *Staphylococcus aureus, Enterococcus faecalis, Streptococcus pneumoniae, Escherichia coli, Klebsiella pneumoniae, Acinetobacter baumanii, Candida albicans, Candida tropicalis, Candida kefyr, Candida glabrata* and *Candida parapsilosis.*

7. The method according to any one of preceding claims, **characterised by** that the microscopic image presents a Gram-stained blood smear.

8. The method according to any one of preceding claims, further comprising, prior to receiving (101) the microscopic image of the blood smear:
training (210) of the deep learning cellular segmentation model comprising:
using (211) the deep learning cellular segmentation model pretrained on dataset comprising plurality of highly varied images of cells labelled manually as a starting point for training;
processing (212) through the pretrained deep learning cellular segmentation model a first subset of microscopic images of a blood smear comprising plurality of microorganism cells to output the segmented microscopic image;
correcting (213) the segmented microscopic image by delineating missed microorganism cells boundaries and surfaces, and removing incorrectly applied microorganism cells boundaries and surfaces, to obtain a corrected segmented microscopic image;
fine-tuning (214) the deep learning cellular segmentation model with the corrected segmented microscopic image;
training (220) jointly the deep learning cellular segmentation model, the deep neural network encoding model, the pooling method and the multi-layer perceptron (MLP) classifier using a gradient descent optimization by processing by the method according to any one of preceding claims a second subset of microscopic images of a blood smear comprising plurality of microorganism cells for indicating what a species of microorganism is present in the microscopic image and verifying performed indication with the label of each microscopic image.

9. The method according claim 8, **characterised by** that the gradient descent optimization uses AdamW optimiser with the learning rate selected in range of [0.0001, 0.005] and weight decay in range of [0.00001, 0.1].

10. The method according to any one of claims 8 and 9, **characterised by** that, the gradient descent optimization uses a OneCycle learning rate scheduler.

11. The method according to any one of claims 8-10, **characterised by** that, the microorganism present in the microscopic images collected in the second subset of microscopic images is sepsis causing pathogenic microorganism.

12. The computer implemented method for training the system according to any one of claims 8-11, **characterised by** that, the microorganism present in the microscopic images collected in the second subset of microscopic images is selected from group consisting of: sepsis causing bacteria and sepsis causing fungi.

13. The computer implemented method for training the system according to any one of claims 8-12, **characterised by** that, the pathogenic microorganism present in the microscopic images collected in the second subset of microscopic images is selected from group consisting of: *Staphylococcus aureus, Enterococcus faecalis, Streptococcus pneumoniae, Escherichia coli, Klebsiella pneumoniae, Acinetobacter baumanii, Candida albicans, Candida tropicalis, Candida kefyr, Candida glabrata* and *Candida parapsilosis.*

14. A data processing system comprising means for carrying out the steps of the method according to any one of claims 1-13.

15. The data processing system according to claim 14, comprising:
a detecting module (311) for detecting plurality of microorganism cells in a microscopic image, to output a segmented microscopic image;
an image patch extraction module (312) for extracting from the segmented microscopic image the patch for each detected pathogenic microorganism cell;
a encoding module (313) for encoding each patch into a patch representation vector *uₙ*;
an aggregation module (314) for aggregating the patch representation vectors *uₙ* to a sample representation vector u;
a classification module (315) for indicating a species of microorganism present in the microscopic image by classifying the sample representation vector u.
